# EUROPÄISCHE PATENTSCHRIFT

(11) **EP 1 559 926 B1**
(45) Veröffentlichungstag und Bekanntmachung des Hinweises auf die Patenterteilung: **14.11.2007**
(21) Anmeldenummer: 04001651.1
(22) Anmeldetag: 27.01.2004
(51) Int. Cl.: F16F 13/10

(54) **Hydrolager mit akustischer Entkopplung**
Hydraulic support with acoustic decoupling
Support hydraulique avec découplage acoustique

(43) Veröffentlichungstag der Anmeldung: 03.08.2005
(73) Patentinhaber: ContiTech Vibration Control GmbH, 30165 Hannover (DE)
(72) Erfinder: Fischer, Werner, 30163 Hannover (DE); Heppes, Peter, Dr., 30989 Gehrden (DE)
(74) Vertreter: Finger, Karsten

(56) Entgegenhaltungen:
- EP-A- 0 040 290
- EP-A- 1 306 576
- PATENT ABSTRACTS OF JAPAN Bd. 1995, Nr. 02, 31. März 1995 (1995-03-31) -& JP 06 307489 A (KURASHIKI KAKO CO LTD), 1. November 1994 (1994-11-01)
- PATENT ABSTRACTS OF JAPAN Bd. 1998, Nr. 02, 30. Januar 1998 (1998-01-30) -& JP 09 264374 A (BRIDGESTONE CORP), 7. Oktober 1997 (1997-10-07)
- PATENT ABSTRACTS OF JAPAN Bd. 2003, Nr. 02, 5. Februar 2003 (2003-02-05) & JP 2002 310223 A (YAMASHITA RUBBER CO LTD), 23. Oktober 2002 (2002-10-23)
- PATENT ABSTRACTS OF JAPAN Bd. 011, Nr. 377 (M-649), 9. Dezember 1987 (1987-12-09) & JP 62 147139 A (KINUGAWA RUBBER IND CO LTD), 1. Juli 1987 (1987-07-01)

## Beschreibung

Die Erfindung besteht in einer Weiterbildung eines z. B. in der DE 35 15 023 C2 beschriebenen Hydrolagers mit den im Oberbegriff des Hauptanspruchs genannten Merkmalen.

Hydrolager (Hydrauliklager) dienen zur elastischen Abstützung von Aggregaten, insbesondere von Kraftfahrzeugmotoren.

In ihrer Grundversion bestehen derartig Hydrauliklager üblicherweise aus einem Gummielement als Tragfeder in Verbindung mit einem hydraulischen Dämpfer. Dabei besteht der hydraulische Dämpfer wiederum aus einem Hydraulikvolumen, das durch eine mit mindestens einem Drosselkanal versehene Trennwand in eine Arbeitskammer und eine Ausgleichskammer unterteilt ist. Mit Hilfe derartiger, sich zwischen Fahrzeugmotor und Chassis befindenden Hydrauliklager soll einerseits verhindert werden, dass sich Motor-Vibrationen auf das Chassis übertragen; andererseits sollen die mit dem Fahrbetrieb gegebenen Erschütterungen gar nicht oder nur gedämpft vom Chassis an den Motor gelangen können.

Darüber hinaus soll verhindert werden, dass akustische Schwingungen, insbesondere in Form von Körperschall, auf das Chassis gelangen können. Zu diesem Zweck weist die Trennwand eine weitere Öffnung auf, die mit einem flexiblen bis starren, um einen Freiweg axial verschieblichen - üblicherweise als "Membran" bezeichneten - Bauelement abgedeckt ist. D. h.: Außer als schwingungsdämpfende Tragkonstruktion für Kraftfahrzeugmotoren sollen derartige Hydrolager zur Filterung akustischer Schwingungen dienen.
Zu diesem Zweck ist die zwischen der Arbeitskammer und der Ausgleichskammer befindliche Trennwand mit einem Entkopplungselement, einer sogenannten "Akustikmembran", ausgestattet. Zur Aufnahme von akustischen Schwingungen, d. h. Schwingungen höherer Frequenz(en) aber geringerer Amplitude(n), ist diese "Akustikmembran" beidseitig mit jeweils einem axialen Freiweg versehen und lose zwischen zwei als wegbegrenzende Endanschläge dienende Gitterplatten angeordnet.

Hierbei ist zu bedenken, dass die Verwendung des Begriffs "Membran" missverständlich aufgefasst werden kann. Unter "Membran" ist üblicherweise ein zweidimensionales, unendlich *flexibles* Gebilde zu verstehen. Im Unterschied dazu wird unter einer "Platte" ein ebenfalls zweidimensionales, aber unendlich *starres* Gebilde verstanden. Die sowohl erfindungsgemäß als auch gemäß dem diesbezüglichen Stand der Technik eingesetzten, axial-beweglichen Bauelemente können flexible bis starre Eigenschaften aufweisen. Dies ist beim Lesen des im folgenden verwendeten Begriffs "Membran" zu berücksichtigen.

Zur Abkopplung akustischer Schwingungen kleiner Amplitude sollte das axial-bewegliche Bauelement möglichst massearm sein.
Wählt man aus diesem Grunde eine an ihrem Umfang eingespannte, dünne flexible Membran, so ist sie am Rande nicht axial beweglich. Sämtliche axial schwingenden Hydraulikpartikel müssen deshalb zur Membran-Mitte umgeleitet werden, was einen unerwünscht großen akustischen Widerstand bedeutet.
Wählt man hingegen eine dünne, starre Blechplatte, die nach Art eines Schwebekolbens in der Trennwand-Öffnung angeordnet ist, so ergibt sich ein schlagendes (klatschendes oder platschendes) Geräusch beim Erreichen einer der gitterförmigen Wegbegrenzungen.
Ist das axial-bewegliche Bauelement eine dicke, lose in die Trennwand eingelegte Gummiplatte, so ergibt sich zwar kein schepperndes Geräusch beim Anschlagen an gitterförmige Wegbegrenzungen, aber aus der Materialstärke resultiert eine unerwünscht große Massenträgheit.

Wählt man hingegen ein lose eingelegtes, dünnes Gummituch, so besteht die Gefahr, dass bei starken Druckschwankungen dieses Gummituch teilweise durch die Gitteraussparungen der Wegbegrenzung gedrückt wird.

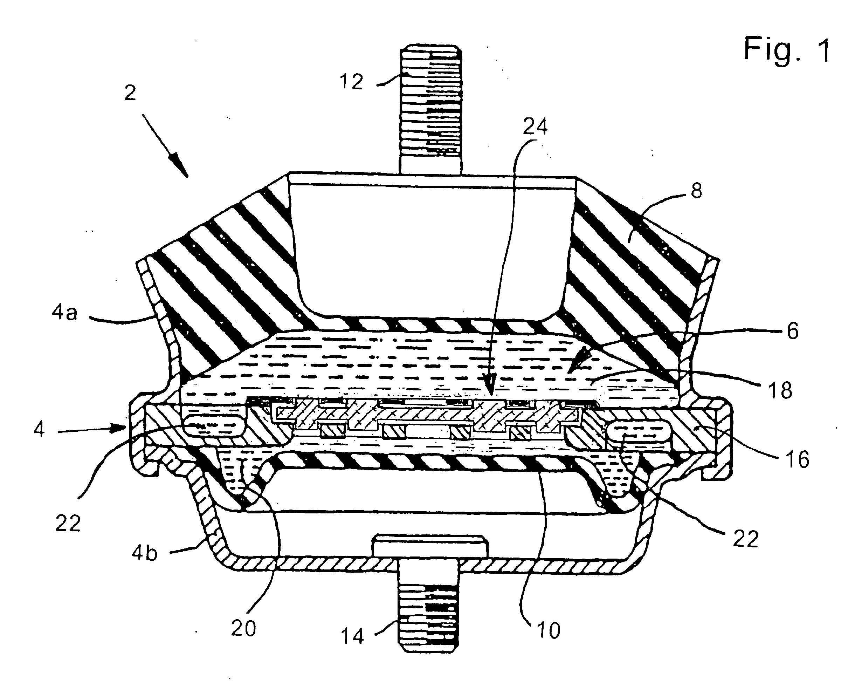

Zur Vermeidung dieser Dilemmas sind verschiedene Lösungen vorgeschlagen worden: Das in der EP 1 306 576 A1 beschriebene Entkopplungselement (14) weist zwei hakenförmig ausgebildete Knöpfe (29) auf, die auf einem von zwei Gittern (15) geklammert (geklipst) sind. Mit Hilfe von lediglich zwei Befestigungsklipsen scheint ein Durchrutschen entfernterer Partien der Membran durch das eine oder andere Gitter nicht zuverlässig unterbunden.
Die DE 35 15 023 C2 schlägt als axial bewegliches Element eine lose zwischen zwei Gitter eingelegte Platte aus elastomerem oder flexiblem Material vor. Die damit gegebenen Probleme ergeben sich aus den zuvor dargelegten Eigenschaften.
Die DE41 41 332 C2 empfiehlt eine in axialer Richtung schwingfähige Membran, die entweder am Rande eingespannt (siehe dort Fig. 5) oder lose zwischen zwei Gitter eingelegt ist (siehe dort z. B. Fig. 1). Die damit gegebenen Probleme sind bekannt.
Die EP 0 040 290 A2 wählt ein Akustik-Filter in Gestalt einer Scheibe (Platte) aus Gummi oder Kunststoff nach Art eines zwischen zwei Gitter lose eingefügten Schwebekolbens oder als flüssigkeitsdicht eingespannte Membran. Die oben geschilderten Probleme scheinen damit ebenfalls nicht gelöst zu sein.
Auch die UK-Patent-Applikation GB 2 237 355 A schlägt eine in die Trennwand eingelassene, axial-bewegliche, starre (Doppel-)Platte vor. Der beidseitige Freiweg wird hier nicht durch zwei von der Platte beabstandete Gitterplatten realisiert sondern durch eine entsprechend spielbehaftete Randeinfassung. Da diese Platte eine Doppelplatte ist, ist sie dementsprechend doppelt massebehaftet.
Schließlich sei noch die DE 34 07 553 C2 erwähnt. Das darin beschriebene akustische Filter besteht in einer in eine Trennwand eingesetzte, biegsame Membran, die einen Randwulst aufweist, der wiederum mit Axialspiel am Rande einer Trennwand-Ausnehmung gehalten wird.

### Aufgabe der Erfindung

Insbesondere im Hinblick auf die EP 1 306 576 A1 besteht die Aufgabe der vorliegenden Erfindung darin, ein gattungsgemäßes Hydrolager derartig weiterzubilden, dass ein Durchrutschen der Entkopplungsmembran zuverlässig vermieden wird. Dabei soll die Entkopplungsmembran nicht so festgeklemmt werden, dass ein freies Spiel und damit eine akustische Entkopplung behindert würde.

### Lösung und Vorteile

Diese Aufgabe ist im Wesentlichen mit den Merkmalen des Hauptanspruchs gelöst. Durch die in den Unteransprüchen aufgeführten Maßnahmen sind bevorzugte Verbesserungen und Weiterbildungen möglich.

Erfindungsgemäß wird vorgeschlagen, das Entkopplungselement mit einem axialen Führungssystem zu versehen. Dabei wird dieses Führungssystem von auf der Membran befindlichen Verdickungen (Noppen und/oder balkenförmige Erhebungen) im Zusammenspiel mit den Gitter-Aussparungen gebildet. Die axial angeordneten Noppen (Führungsnoppen) gewährleisten eine einwandfreie seitliche Führung und verhindern ein Durchrutschen des insgesamt leichten Entkopplungselements durch Gitterfugen. Dabei bewirken die auf der Membran befindlichen Verdickungen eine Versteifung der Membran im Bereich der Gitteraussparungen, wodurch verhindert wird, dass die Membran bei auf ihr einwirkende Druckspitzen zu sehr in die Aussparungen getrieben wird (werden kann) oder sogar durch die Zwischenräume durchrutschen kann. Da somit auf eingelegte Metallverstärkungen verzichtet werden kann, ist auch kein erhöhtes Geräuschniveau zu erwarten.

Trotz der Führungsnoppen ist ein ungehindert freies Spiel des Entkopplungselements im Rahmen des Gitterabstands gewährleistet.
Verglichen mit einer biegesteifen, starren Membran (Platte) ergeben sich geringere Herstellkosten und ein besseres akustisches Verhalten. Da die Noppen lediglich als Führungselemente und nicht als Verschlusselemente dienen, kann auf Kongruenz bei der Gestaltung von Membran-Noppen und Gitter-Aussparungen verzichtet werden.

Zur besseren Führung können die Kanten der Noppen abgerundet und ihr Querschnitt konisch ausgebildet sein. Insgesamt werden mit der erfindungsgemäßen Konstruktion die eingangs geschilderten Probleme weitgehend vermieden.

### Zeichnungen

Im folgenden wird ein Ausführungsbeispiel des erfindungsgemäßen Hydrolagers und die damit gegebenen Vorteile anhand der beigefügten Zeichnungen näher erläutert. Es zeigt.
Fig. 1 die Gesamtansicht eines Hydrolagers im Längsschnitt;
Fig. 2 den mittleren Bereich einer Trennwand, ebenfalls im Längsschnitt;
Fig. 3 eine Trennwand mit integrierter Gitter-Grundplatte, von oben betrachtet.
Fig. 4 zeigt ein Entkopplungselement, und zwar:
Fig. 4a von oben und Fig. 4b von der Seite betrachtet.

### Beschreibung

Die Gesamtansicht des in Fig. 1 im Längsschnitt dargestellten Hydrauliklagers 2 zeigt ein in einem zweiteiligen 4a, 4b, topfförmigen Gehäuse 4 befindliches Hydraulikvolumen 6. Dieses Hydraulikvolumen 6 ist "oben" durch eine aus elastomerem Material bestehende Lagerfeder (Tragfeder) 8 und "unten" durch eine flexible Ausgleichsmembran (Rollmembran) 10 abgeschlossen. Die Lagerfeder 8 ist mittels eines Bolzens 12 an einem Fahrzeugmotor (nicht dargestellt), der Boden des topfförmigen Gehäuses 4 ist mit einem weiteren Bolzen 14 an einem Fahrzeugchassis (ebenfalls nicht dargestellt) anbringbar. Das Hydraulikvolumen 6 ist durch eine sich radial erstreckende Trennwand 16 in eine Arbeits-18 und eine Ausgleichskammer 20 unterteilt. Zur Dämpfung von Schwingungen und Erschütterungen sind beide Kammern 18, 20 über einen Drosselkanal (Ringkanal) 22 miteinander verbunden. Die Trennwand 16 weist mittig eine großdimensionierte Öffnung auf, in die zur Filterung von Körperschall eine Akustikfiltereinheit 24 eingefügt ist.

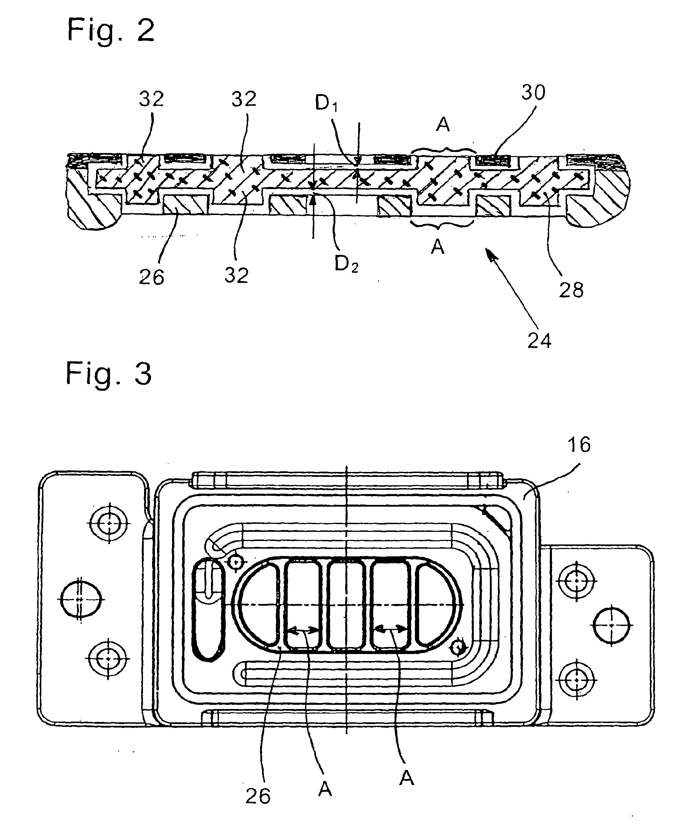

Der bisher geschilderte Grundaufbau entspricht dem der aus dem Stand der Technik bekannten Hydraulikfedern. Die die vorliegende Erfindung betreffende Ausgestaltung der Akustikfiltereinheit 24 wird anhand der Detaildarstellung in Fig. 2 erläutert.

Die ebenfalls im Längsschnitt dargestellte Akustikfiltereinheit 24 besteht aus einer Gitter-Grundplatte 26, einer Drosselmembran (Entkopplungselement) 28 und einer Gitter-Drosselplatte 30. Die Drosselmembran 28 ist weder an ihrem Rand noch sonst wo eingespannt sondern beidseitig axial jeweils um einen Freiweg D₁, D₂ zwischen den beiden Gitterplatten 26, 30 frei beweglich. Die aus elastomerem Material bestehende Drosselmembran 28 ist relativ dünn. Damit sie aufgrund von Druckspitzen nicht durch die Gitterzwischenräume A gedrückt werden kann, ist sie beidseitig mit noppenartigen Erhebungen (Führungsnoppen) 32 versehen, die zu den Zwischenräumen A der Gitterplatten 26, 30 korrespondieren.

Die Fig. 3 zeigt eine Gitter-Grundplatte 26, die integrierter Bestandteil einer Trennwand 16 ist. Im vorliegenden Ausführungsbeispiel ist diese Gittergrundplatte 26 nicht kreisrund sondern länglich ausgebildet.

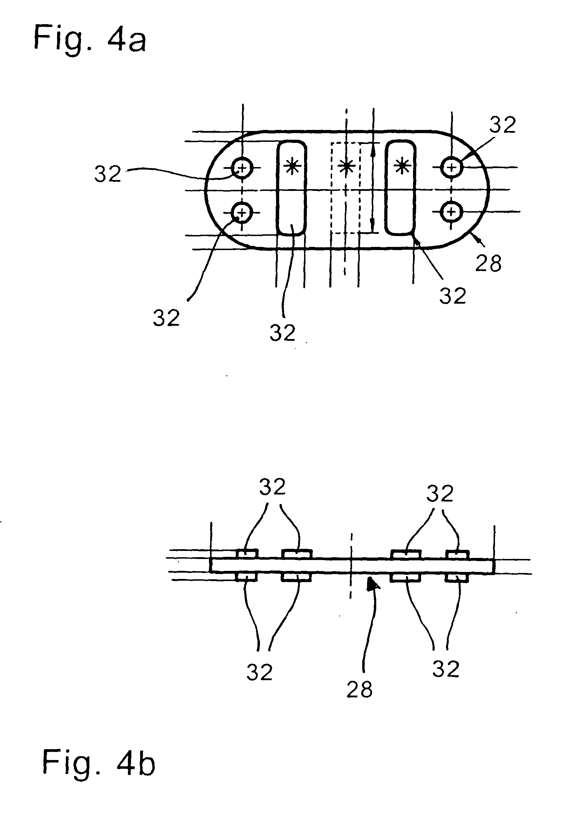

Die zugeordnete Drosselmembran 28 ist in den Figuren 4a und 4b dargestellt.
Die Erhebungen (Noppen bzw. balkenartige Verdickungen) 32 der Drosselmembran 28 korrespondieren zwar zu entsprechenden Aussparungen A in den zugehörigen Gitterplatten 26, 30, sind aber nicht zwangsläufig zu den Aussparungen A kongruent: Die seitlich angeordneten Membran-Noppen 32 greifen in halbmondförmige Aussparungen A der Gitterplatten 26, 30 ein. Auch mit dieser Ausbildung der Noppen 32 und der zugeordneten Aussparungen A wird ein Verschieben der Membran 28 und ein Durchrutschen durch die in den Gittern 26, 30 angeordneten Aussparungen A zuverlässig verhindert. D. h.: Die Noppen 32 dienen als "Führungsnoppen" und unterscheiden sich insofern z. B. von den in der DE 37 31 524 A1 beschriebenen (Abstands- bzw. Anschlags-)Noppen und von den in der EP 0 212 143 A2 dargestellten "Auslenkungsbegrenzungs- bzw. Biegebegrenzungsnoppen" umfangsseitig eingespannter Entkopplungsmembranen.

### Bezugszeichenliste

- 2: Hydrolager, Hydrauliklager, Hydraulikfeder
- 4: (Lager-)Gehäuse
- 4a: "oberes" Gehäuseteil
- 4b: "unteres" Gehäuseteil
- 6: Hydraulik-Volumen
- 8: Gummifeder, Tragfeder, Lagerfeder
- 10: Ausgleichsmembran, Rollmembran
- 12: Bolzen, "oberer" Befestigungsbolzen, Bolzen
- 14: Bolzen, "unterer" (weiterer) Befestigungsbolzen, Bolzen
- 16: Trennwand, Trennplatte, Drosselplatte
- 18: Arbeitskammer
- 20: Ausgleichskammer
- 22: Überströmkanal, Drosselkanal, Ringkanal
- 24: Entkopplungseinheit, Akustikfiltereinheit
- 26: "untere" Anschlagplatte, "unteres" Gitter, Gitter-Grundplatte
- 28: axial verschiebliches Element, Entkopplungselement, Entkopplungsmembran, Akustikmembran, Drosselmembran
- 30: "obere" Anschlagplatte, "oberes" Gitter, Gitter-Drosselplatte
- 32: Erhebungen (Noppen bzw. balkenförmige Verdickungen auf Entkopplungselement), Führungsnoppen
- A: Gitterzwischenräume, Aussparungen auf Anschlagplatte(n)
- D₁, D₂: Freiweg

## Patentansprüche

1. Hydrolager (2)
mit einem von einem topfförmigen Gehäuse (4) umgebenen Hydraulikvolumen (6), dass "oben durch eine aus elastomerem Material bestehende Lagerfeder (8) und "unten" durch eine Ausgleichsmembran (10) abgeschlossen
und in eine Arbeits- (18) und in eine Ausgleichskammer (20) unterteilt ist,
wobei die Arbeitskammer (18) und die Ausgleichskammer (20) über einen in einer Trennwand (16) befindlichen Überströmkanal (22) miteinander verbunden sind, und
wobei die Trennwand (16) eine Öffnung aufweist, in die ein zwischen zwei Gitterplatten (26, 30) wegbegrenztes, seitlich nicht befestigtes Entkopplungselement (28) eingelassen ist,
**dadurch gekennzeichnet,**
**dass** die beiden Gitterplatten (26, 30) Aussparungen (A) aufweisen,
die zur axialen Führung von an den beiden Oberflächen des Entkopplungselements (28) als Führungsnoppen ausgebildeten Erhebungen (32) vorgesehen sind.

2. Hydrolager nach Anspruch 1,
**dadurch gekennzeichnet,**
**dass** das Entkopplungselement (28) kreisrund oder länglich ist.

3. Hydrolager nach Anspruch 1 oder 2,
**dadurch gekennzeichnet,**
**dass** die auf dem Entkopplungselement (28) befindlichen Führungsnoppen (32) kreisrund, ringförmig oder rechteckig sind.

4. Hydrolager nach einem der Ansprüche 1 bis 3,
**dadurch gekennzeichnet,**
**dass** die auf dem Entkopplungselement (28) befindlichen Führungsnoppen (32) unterschiedliche Höhe aufweisen.

5. Hydrolager nach einem der Ansprüche 1 bis 4,
**dadurch gekennzeichnet,**
**dass** die auf dem Entkopplungselement (28) angeordneten Führungsnoppen (32) abgerundet sind und/oder einen konischen Längsschnitt aufweisen.

## Claims

1. Hydraulic support (2) having a hydraulic volume (6) which is surrounded by a pot-shaped housing (4) and which is closed off "at the top" by a bearing spring (8) which is composed of an elastomer material and "at the bottom" by an equalizing diaphragm (10), and is divided into a working chamber (18) and into an equalizing chamber (20), wherein the working chamber (18) and the equalizing chamber (20) are connected to one another by means of an overflow duct (22) which is located in a dividing wall (16), and wherein the dividing wall (16) has an opening into which a decoupling element (28) which is bounded between two grill plates (26, 30) and is not attached laterally is let in, **characterized in that** the two grill plates (26, 30) have recesses (A) which are provided for axially guiding elevations (32) which are formed on the two surfaces of the decoupling element (28) as guide knobs.

2. Hydraulic support according to Claim 1, **characterized in that** the decoupling element (28) is circular or elongate.

3. Hydraulic support according to Claim 1 or 2, **characterized in that** the guide knobs (32) which are located on the decoupling element (28) are circular, annular or rectangular.

4. Hydraulic support according to one of Claims 1 to 3, **characterized in that** the guide knobs (32) which are located on the decoupling element (28) have different heights.

5. Hydraulic support according to one of Claims 1 to 4, **characterized in that** the guide knobs (32) which are arranged on the decoupling element (28) are rounded and/or have a conical longitudinal section.

## Revendications

1. Palier hydraulique (2) qui présente un volume hydraulique (6) entouré par un boîtier (4) en forme de chapeau et fermé "dans le haut" par un ressort de palier (8) constitué d'un matériau élastomère et "dans le bas" par une membrane d'équilibrage (10), et divisé en une chambre de travail (18) et une chambre d'équilibrage (20), la chambre de travail (18) et la chambre d'équilibrage (20) étant reliées l'une à l'autre par un canal de débordement (22) situé dans une paroi de séparation (16), la paroi de séparation (16) présentant une ouverture dans laquelle est ménagé un élément de désaccouplement (28) non fixé latéralement et dont le parcours est délimité par deux plaques de grille (26, 30),
**caractérisé en ce que**
les deux plaques de grille (26, 30) présentent des découpes (A) qui sont prévues pour guider axialement des saillies (32) configurées en boutons de guidage sur les deux surfaces de l'élément de désaccouplement (28).

2. Palier hydraulique selon la revendication 1, **caractérisé en ce que** l'élément de désaccouplement (28) est circulaire ou allongé.

3. Palier hydraulique selon les revendications 1 ou 2, **caractérisé en ce que** les boutons de guidage (32) situés sur l'élément de désaccouplement (28) sont circulaires, annulaires ou rectangulaires.

4. Palier hydraulique selon l'une des revendications 1 à 3, **caractérisé en ce que** les boutons de guidage (32) situés sur l'élément de désaccouplement (28) ont des hauteurs différentes.

5. Palier hydraulique selon l'une des revendications 1 à 4, **caractérisé en ce que** les boutons de guidage (32) situés sur l'élément de désaccouplement (28) sont arrondis et/ou présentent une coupe longitudinale conique.
